# EUROPÄISCHE PATENTSCHRIFT

(11) **EP 0 840 052 B1**
(45) Veröffentlichungstag und Bekanntmachung des Hinweises auf die Patenterteilung: **14.08.2002**
(21) Anmeldenummer: 97118969.1
(22) Anmeldetag: 30.10.1997
(51) Int. Cl.: F16L 55/07, F24F 13/22

(54) **Rohr für den Abfluss von Kondensflüssigkeit aus einer Klimaanlage**
Pipe for draining condensate from an air conditioner
Tuyau pour vider condensate d'un dispositif de climatisation

(30) Priorität: 31.10.1996 IT MI962264
(43) Veröffentlichungstag der Anmeldung: 06.05.1998
(73) Patentinhaber: Ractek S.r.l., 41015 Nonantola (MO) (IT)
(72) Erfinder: Manfredi, Riccardo, 41015 - Nonantola (MO) (IT)
(74) Vertreter: Mayer, Hans Benno, Dipl.-Ing.

(56) Entgegenhaltungen:
- WO-A-90/02902
- DE-A- 2 543 811
- DE-A- 3 932 300
- GB-A- 2 157 386
- US-A- 3 966 525
- US-A- 4 022 248
- US-A- 4 811 753
- US-A- 5 390 967

## Beschreibung

Die vorstehende Erfindung betrifft ein Rohr fuer den Abfluss von Kondensfluessigkeit aus einer Klimaanlage.

Es ist bekannt, dass technische Geraete, wie z.B. Kuehlschraenke, Klimaanlagen, Klimananlagen fuer Fahrzeuge oder Anlagen zur Rueckgewinnung von Loesungsmitteln, Rohrleitungen zum Ableiten der sich einstellenden Kondensfluessigkeit benoetigen.

Diese Rohrleitungen weisen besondere technischen Merkmale auf und zeichnen sich z.B. durch hohe Waermeisolierung, hohe Widerstandsfaehigkeit gegen Oxidation und Abrieb und durch einen niedrigen Widerstand gegen Fluessigkeitsstroemungen, sowie eine hohe Flexibilitaet im Raum aus. Es wird eine einfache Anpassung des Rohres bei Montage, die Moeglichkeit eines einfachen Trennvorganges sowie ein einfaches Verbinden mit Rohranschluessen ermoeglicht. Ferner sind die Rohre der beschriebenen Art ausgesprochen kostenguenstig.

Derzeitig werden die genannten Rohre vorwiegend in Laendern mit einem niedrigen Lohnkostenniveau hergestellt.

Die bekannten Rohrleitungen bestehen aus einem innenliegenden Rohr, das tragenden Aufbau hat und zu diesem Zwecke durch einen Metalldraht verstaerkt wird, der nach Art einer Wendel angeordnet ist und in das Kunststoffmaterial des innenliegenden Rohres eingebettet ist. Die Aussenseite des tragenden Rohres wird mit einem Band aus geschaeumtem Material mit Isoliereigenschaften umwickelt. Das zu Isolierzwecken vorgesehene Band wird des weiteren mit einem elastischen Film umwickelt, der in die Fugen des wendelartigen, isolierenden Bandes eintritt.

Ein derartiges Rohr ist in zahlreichen, aufwendigen Fertigungsvorgaengen herzustellen und es treten erhebliche Schwierigkeiten beim Anpassen der Rohrstuecke waehrend der Montage des Rohres auf, besonders aufgrund der Vorsehung eines wendelartig eingebetteten Metalldrahtes.

Der fertigungstechnische Aufwand und die Schwierigkeiten, die mit der Beschaffung solcher Rohre, die in fernen Laendern gefertigt werden, zusammenhaengt, fuehren zu einer Verteuerung des bekannten Rohres zur Ableitung von Kondensfluessigkeit.

Aufgabe der vorstehenden Erfindung ist es, die Nachteile des Standes der Technik zu vermeiden und den Fertigungsaufwand fuer die Herstellung des Rohres zu vermindern und die Verbindung des Rohrstueckes mit Anschlusstuecken sowie die Besorgung des Rohrmateriales zu vereinfachen.

Eine weitere Aufgabe der Erfindung besteht darin, die raeumliche Anpassungsmoeglichkeiten des Rohres waehrend der Montage zu verbessern, aber dabei die notwendige Widerstandsfaehigkeit, die hohe Flexibilitaet und ausserordentlich gute thermische Isolierfaehigkeit des Rohres beizubehalten.

Die genannten Aufgaben werden mit der Erfindung durch Einsatz eines Rohres fuer den Ablauf von Kondensfluessigkeit aus einer Klimaanlge dadurch geloest, dass ein erstes Rohr Verwendung findet, das aus einer elastischen Wand besteht und durch elastische, tragende Rippen verstaerkt ist, dass dieses innenliegende Rohr mit Uebermass mit einem auesseren Rohr aus isolierendem Material verbunden ist und das aeussere Rohr aus isolierendem Material an seiner Aussenseite mit einer Schutzhuelle ummantelt ist.

In vorteilhafter Weise ist das tragend ausgebildete Rohr unter Verwendung eines Elastomeres hergestellt.

Ein Rohr mit den Merkmalen des Innenrohres ist per se aus der DE 25 43 811 A bekannt.

Ein weiterer Vorteil der Erfindung besteht darin, dass das aussenliegende und isolierende Rohr aus geschaeumtem Material besteht.

Des weiteren hat es sich als vorteilhaft erwiesen, dass das tragend ausgebildete Rohr auf der Innenseite eine glatte Wand aufweist.

Vorteilhaft ist es ferner, wenn der Aussendurchmesser des tragenden Rohres groesser ist als der Innendurchmesser des isolierenden Rohres.

Ein vorteilhafter Anschlussstutzen fuer das Rohr zum Abfuehren von Kondensfluessigkeit z.B. aus einem Klimageraet ist dadurch gekennzeichnet, dass das Anschlussstueck im Schnitt U-foermige Gestalt aufweist, dass das U-foermige Teil mit innerem und aeusserem Uebermass das Rohr umfasst und von dem U-foermig ausgebildeten Teilstueck ein Anschlussrohr absteht.

In vorteilhafter Weise ist das Anschlussstueck aus einem Elastomer hergestellt.

In einer weiteren, vorteilhaften Ausfuehrungsform weist das Anschlussstueck fuer das Rohr zum Abfuehren von Kondensfluessigkeit aus einer Klimaanlage ein Endstueck auf, das mit einem Innengewinde versehen ist, wobei der Verlauf des Gewindes dem Aussenprofil des tragenden Rohres angepasst ist.

Das Verfahren zur Herstellung des Rohres fuer den Abfluss einer Kondensfluessigkeit aus einer Klimaanlage kennzeichnet sich dadurch, dass das aussenliegende, isolierende Rohrstueck an einem Ende verschlossen wird und im Anschluss daran Druckluft in das Innere des aeusseren, isolierenden Rohres ueber das innenliegende, tragend ausgebildete Rohrstueck eingeblasen wird und das innenliegende, tragende Rohrstueck waehrend des Aufweitens des aussenliegenden, isolierenden Rohrstueckes, aufgrund der eingeblasenen Druckluft, eingeschoben wird und am Ende des Einfuehrvorganges des innenliegenden Rohrstueckes eine Unterbrechung der Druckluftzufuhr erfolgt, und das aussenliegende, aus geschaeumtem und isolierendem Material bestehende Rohr erneut seine urspruengliche Abmessung einnimmt und die aeussere Flaeche des innenliegenden Rohrstueckes formschluessig umgreift.

Durch das erfindungsgemaesse Rohr sowie das Anschlussstueck des Rohres fuer den Ablauf von Kondensfluessigkeit z.B. aus einer Klimaanlage, werden folgende Vorteile erzielt:

Das Rohr ist in einfacher Weise gegenueber bekannten Rohren dieser Art herstellbar, die einzelnen Bestandteile des Rohres sind einfach herstellbar oder auf einfache Weise auf dem freien Markt zu beschaffen; des weiteren sind die einzelnen Bestandteile des Rohres problemlos zusammensetzbar.

Ein weiterer Vorteil des vorgeschlagenen Rohres besteht in der einfachen Anpassung des Rohres waehrend des Montagevorganges. Das Rohr kann auf einfache Weise auf Laenge geschnitten werden und auf einfache Weise sind an den Enden des Rohres Anschlussstuecke ansetzbar. Gleichzeitig wird ein Rohr mit hoher Widerstandsfaehigkeit gegen mechanische Belastungen bei hoher Flexibilitaet sowie einem geringen Stroemungswiderstand geschaffen.

Des weiteren hat sich als sehr vorteilhaft erwiesen, dass das innenliegende, tragende Rohr auf einfache Art und Weise mit dem aus geschaeumtem, isolierendem Material hergestellten aeusseren Rohr verbindbar ist.

Der Erfindungsgegenstand wird nun im Anschluss genauer beschrieben und anhand eines Ausfuehrungsbeispieles in den Zeichnungen dargestellt.

Es zeigen:
Figur 1, im Schnitt, ein Rohrstueck mit einem Anschlussstutzen;
Figur 2, im Schnitt, den Verbindungsvorgang des inneren, tragenden Rohres mit dem aeusseren, isolierenden Rohr; und
Figur 3, im Schnitt, ein Rohrstueck, mit einer zweiten, aufgeschraubten Ausfuehrungsform eines Anschlussstutzens.

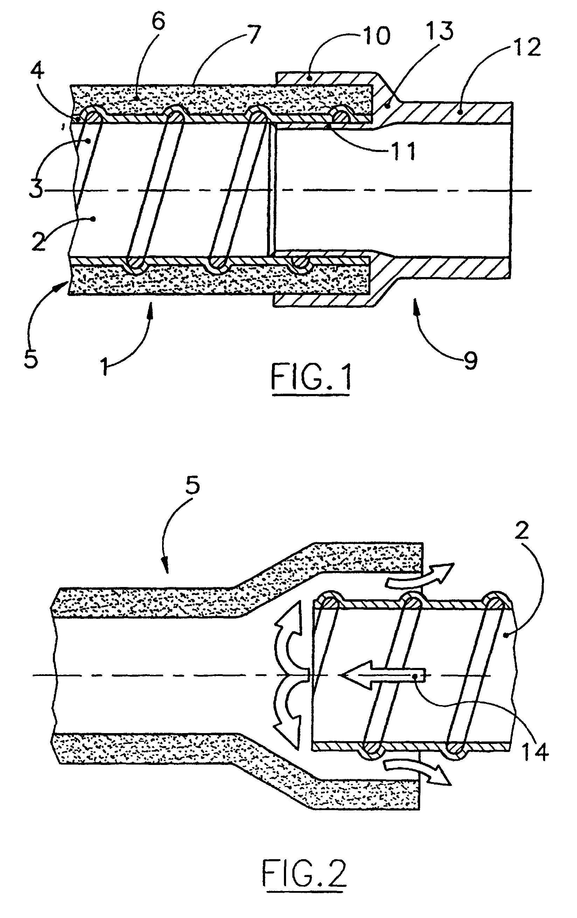

Der Figur 1 kann eine erste Ausfuehrungsform des erfindungsmaessen Rohres entnommen werden. Das isolierende Rohr ist gesamthaft mit 1 gekennzeichnet und besteht aus einem Rohr 2, das aus Kunststoff hergestellt ist, z.B. einem Elastomer, das Rippen 3 zur Verstaerkung der Rohrwand aufweist. Die Vestaerkungsrippen 3 sind in die Wand 4 eingelegt.

In vorteilhafter Weise sind die Verstaerkungsrippen 3 in Form einer Wendel vorgesehen, die im Schnitt gesehen die Form eines Halbkreises aufweist und eine Abflachung auf der Innenseite des Rohres hat. Somit wird die Innenflaeche des Rohres 2 durch eine glatte Wand gebildet.

Die Verstaerkungsrippe 3 kann im Bedarfsfalle auch trapezfoermigen oder rechteckigen Querschnitt haben.

Ein weiterer Vorteil besteht darin, dass die Wand 4 die wendelartig vorgesehene Versteifungsrippe 3 umhuellt.

In vorteilhafter Weise besteht das tragende Rohr 2 aus einem Elastomer und weist eine Verrippung auf, um dadurch dem Rohr erhoehte Widerstandsfaehigkeit gegen mechanische Belastungen bei gleichzeitiger hoher Elastizitaet zu verleihen. Das beschriebene, tragend ausgebildete Rohr 2 ist auf einfache Weise auf dem Markt erhaeltlich, z.B. in Form eines PVC-Rohres, das auf elektrotechnischem Gebiete bereits als Kabelfuehrungsrohr Verwendung findet.

Das tragend ausgebildete Rohr 2 wird von einem Rohr 5 aus geschaeumtem und isolierendem Material umhuellt.

Das isolierende Rohr 5 besteht z.B. aus einem Materialstreifen 6 eines geschaeumten Elastomers, das um das innenliegende Rohr gehuellt wird und laengs der Stosskanten, laengs des Rohres 5, durch Kleben oder Schweissen verbunden wird.

Das geschaeumte Material wird an seiner Aussenseite durch einen duennen Film 7, der eine Schutzwirkung aufbaut, umhuellt.

Der Film 7 ist in vorteilhafter Weise reflektierend ausgebildet.

Das isolierende, aussenliegende Rohr 5 wird mit einem Innendurchmesser hergestellt, der kleiner als der Aussendurchmesser des tragenden Rohres 2 gewaehlt ist.

In Figur 1 ist ein Anschlussstueck 9 dargestellt, das ausschliesslich fuer das erfindungsgemaesse Rohr entwickelt wurde.

Das Anschlussstueck 9 besteht aus zwei einstueckig verbundenen Rohrteilen.

Das erste Rohrteil weist im Schnitt U-foermige Gestalt auf, und die Arme 10 und 11 des U-foermigen Teiles begrenzen einen Ringraum, der geeignet ist, das Endstueck des Rohres 1 aufzunehmen. Das vom Anschlussstueck 9 abstehende Teil 12 ist als Verlaengerungsrohr 12 ausgebildet, welches einstueckig mit dem U-foermigen Teilstueck 13 verbunden ist;

In vorteilhafter Weise ist die rohrfoermige Verlaengerung 12 des Anschlussteiles 9 derartig ausgebildet, dass ein Anschluss mit anderen Rohren oder Bauteilen der Klimaanlage, z.B. einer Schnellkupplung, moeglich wird.

Das Rohrstueck 1 wird mit dem Anschlussstueck 9 durch kraftschluessige Verbindung oder durch eine Klebeverbindung im Inneren des vom U-foermig ausgebildeten Teilstueckes des Anschussstueckes festgelegten Raumes verbunden.

In vorteilhafter Weise kann das Rohr mit dem Anschlussstutzen 9 auch durch Ultraschalltechnik oder Schmelztechnik der Elastomere, die das Rohr 1 und das Anschlussstueck 9 bilden, erfolgen.

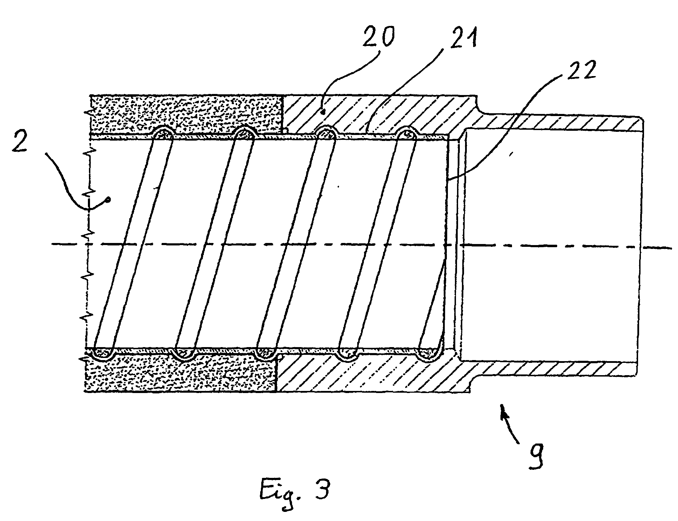

Der Figur 3 kann ein weiteres Ausfuehrungsbeispiel des Anschlusstueckes 9 entnommen werden.

Ein Ende 20 des rohrfoermigen Anschluessstueckes 9 weist auf seiner Innenseite ein Gewinde 21 mit einem Anschlag 22 auf, und das Gewinde ist mit einem Durchmesser ausgebildet, der gleich oder kleiner dem Aussendurchmesser des tragenden Rohres 2 ausgestaltet ist.

Das Profil des Gewindes 21 gibt die Wendelform an der Aussenseite des tragenden Rohres 2 wieder.

Diese Wendelform wird durch das Vorhandensein der wendelartig ausgebildeten Verstaerkungsrippen 3 auf der Innenseite des tragenden Rohres 2 bestimmt.

Der Einbau der erfindungsgemaessen Rohrstuecke kann auf aeusserst einfache Weise erfolgen.

Es ist moeglich, die Rohrstuecke durch einen einfachen Schneidvorgang, unter Verwendung ueblicher Werkzeuge, wie z.B. Scheren, Messer oder anderen Schneidgeraeten durchzufuehren, um Rohrabschnitte zu bilden, die mit den vorgeschlagenen Ansschlussstuecken fuer die Montage im Klimageraet ausgeruestet werden.

Das vorgeschlagene Bauteil weist eine glatte Innenwandung auf, die das Abfliessen der Kondensfluessigkeit beschleunigt.

Die formschluessige Verbindung mit Uebermass zwischen dem tragenden Rohr 2 und dem isolierenden Rohr 5 verhindert, dass sich unerwuenschte Luftraeume zwischen diesen Rohrteilen bilden, wodurch vermieden wird, dass sich in diesen Luftraeumen kondensierte Fluessigkeit an der Aussenseite des tragenden Rohres 2 bilden und nicht mehr abfliessen koennen.

Durch den Einsatz des tragenden Rohres 2 mittels einer von Rippen 3 verstaerkten Wand 4, die wendelartig angeordnet sind, wird dem Rohr 1 in seiner Gesamtheit eine grosse Flexibilitaet und folglich eine bestmoegliche Anpassung an die raeumlichen Verhaeltnisse im Klimageraet, an welches das Rohr anzuschliessen ist, verliehen.

In Figur 2 ist das vorgeschlagene Montageverfahren zum Verbinden des isolierenden Rohres 5 mit dem tragenden Rohr dargestellt.

Es wird ein Ende des isolierenden Rohrstueckes 5 verschlossen und Druckluft 14 vom anderen Ende des Rohres 5 eingeblasen.

Die Druckluft kann z.B. direkt ueber das einzufuehrende, tragende Rohr 2 eingeblasen werden.

Da der Durchmesser des tragenden Rohres groesser als der Innendurchmeser des isolierenden Rohres 5 ist, und fuer die unter Druck eingeblasene Luft 14 keine Moeglichkeit besteht ungehindert aus dem Rohr 5 auszustroemen, erfolgt ein elastisches Aufweiten des sehr nachgiebig ausgebildeten Rohres 5 in der Naehe des Druckluftstromes 14 oder um das Ende des Rohres 2. Somit wird um das Rohr 2, ueber das die Druckluft 14 zugefuehrt wird, ein Luftmantel gebildet.

Durch das allmaehliche Aufweiten des isolierenden Rohres 5 wird es moeglich, das tragende Rohr 2 in das Rohr 5 ungehindert einzuschieben, bis ein vollstaendiges Einbringen des Rohres 2 und ein Umhuellen des Rohres 2 durch das isolierende Rohr 5 erfolgt ist.

Wird dann die Zufuhr der Druckluft 14 unterbrochen, so wird sich das aussenliegende, isolierende Rohr 5, welches durch die Zufuhr von Druckluft elastisch aufgeweitet wurde, erneut zusammenziehen, um eine innige Verbindung mit der gerippten Aussenflaeche des tragenden Rohres 2 einzugehen, um das gewuenschte Rohrteil 1 fuer den Abfluss des Kondensates zu schaffen.

## Patentansprüche

1. Rohr (1) für den Ablauf einer Kondensflüssigkeit aus einer Klimaanlage oder ähnlichen Einrichtungen, mit einem Innenrohr (2), bestehend aus einer elastischen Wand (4), die durch elastische, tragende Rippen (3) verstärkt ist,
**dadurch gekennzeichnet,**
**dass** das Innenrohr (2) ein Übermass gegenüber einem äusseren Rohr (6) aus isolierendem Material aufweist, das äussere Rohr (6) formschlüssig auf das Innenrohr (2) aufgezogen ist und das äussere Rohr (6) an seiner Aussenseite mit einer Schutzhülle (7) ummantelt ist.

2. Rohr (1), nach Patentanspruch 1, **dadurch gekennzeichnet, dass** der Aussendurchmesser des Innenrohres (2) grösser als der Innendurchmesser des isolierenden Aussenrohres (6) ist.

3. Rohr (1), nach Patentanspruch 1, **dadurch gekennzeichnet, dass** am Ende des Rohres (1) ein Anschlußstück (9) vorgesehen ist, welches ein im Schnitt U-förmig ausgebildetes Teil (10,11,13) aufweist, dass das U-förmig ausgebildete Teil (10,11,13) mit Übermass das Ende des Rohres (1) umgreift und vom U-förmig ausgebildeten Teil (10,11,13) ein Verbindungsrohr (12) absteht.

4. Rohr (1), nach Patentanspruch 1, **dadurch gekennzeichnet, dass** ein Ende (20) des Anschlußstückes (9) ein Innengewinde (21) aufweist und das Profil des Innengewindes (21) dem äusseren Profil des Innenrohres (2) entspricht.

5. Verfahren zum Herstellen eines Rohres (1) für den Abfluss von Kondensflüssigkeit aus einem Klimagerät gemäss Patentanspruch 1, **dadurch gekennzeichnet, dass** das Aussenrohr (5,6) an einem Ende verschlossen wird und Druckluft (14) in das Innere des Aussenrohres (5,6) über das Innenrohr (2) eingeblasen wird, dass im Anschluss das Innenrohr (2) in das, aufgrund der mit Druck eingeblasenen Luft (14) aufgeweitete Aussenrohr (5,6) eingeführt wird und am Ende des Einführvorganges des Innenrohres (2) der Zufluss von Druckluft unterbrochen wird und bei Rückkehr des isolierenden Aussenrohres (5) zu seiner ursprüglichen Abmessung, ein formschlüssiges, inniges Umgreifen der äusseren Fläche des Innenrohres (2) erfolgt.

## Claims

1. Pipe (1) for draining condensation from an air-conditioning installation or similar appliances, having an inner pipe (2) comprising an elastic wall (4) which is reinforced by elastic, supporting ribs (3), **characterized in that** the inner pipe (2) is overdimensioned in relation to an outer pipe (6) made of insulating material, the outer pipe (6) is drawn in a form-fitting manner onto the inner pipe (2), and the outer pipe (6) is encased on its outside by a protective sleeve (7).

2. Pipe (1) according to Patent Claim 1, **characterized in that** the external diameter of the inner pipe (2) is greater than the internal diameter of the insulating outer pipe (6).

3. Pipe (1) according to Patent Claim 1, **characterized in that** provided at the end of the pipe (1) is a connection piece (9) which has a sectionally U-shaped part (10, 11, 13), **in that** the U-shaped part (10, 11, 13) engages, with overdimensioning, around the end of the pipe (1), and a connecting pipe (12) projects from the U-shaped part (10, 11, 13).

4. Pipe (1) according to Patent Claim 1, **characterized in that** an end (20) of the connection piece (9) has an internal thread (21), and the profile of the internal thread (21) corresponds to the outer profile of the inner pipe (2).

5. Process for producing a pipe (1) for the outflow of condensation from an air-conditioning installation according to Patent Claim 1, **characterized in that** the outer pipe (5, 6) is closed at one end and compressed air (14) is blown into the interior of the outer pipe (5, 6) via the inner pipe (2), and **in that** the inner pipe (2) is then introduced into the outer pipe (5, 6), which has been widened on account of the air (14) blown in under pressure, and, at the end of the operation of introducing the inner pipe (2), the supply of compressed air is interrupted and, when the insulating outer pipe (5) returns to its original dimensioning, it grips closely in a form-fitting manner around the outer surface of the inner pipe (2).

## Revendications

1. Tuyau (1) pour évacuer un condensat d'une installation de climatisation ou de dispositifs similaires, comprenant un tuyau interne (2) se composant d'une paroi élastique (4) renforcée par des nervures de support élastiques (3),
**caractérisé en ce que**
le tuyau interne (2) présente un surdimensionnement par rapport à un tuyau externe (6) en matériau isolant, le tuyau externe (6) est tiré par engagement par blocage sur le tuyau interne (2) et le tuyau externe (6) est enveloppé au niveau de sa face extérieure d'une gaine protectrice (7).

2. Tuyau (1) selon la revendication 1, **caractérisé en ce que** le diamètre extérieur du tuyau interne (2) est supérieur au diamètre intérieur du tuyau externe isolant (6).

3. Tuyau (1) selon la revendication 1, **caractérisé en ce qu**'il est prévu, à l'extrémité du tuyau (1), un raccord (9) qui présente une partie de section en forme de U (10, 11, 13), en ce que la partie en forme de U (10, 11, 13) entoure avec engagement, avec un surdimensionnement, l'extrémité du tuyau (1) et un tuyau de connexion (12) dépasse depuis la partie en forme de U (10, 11, 13).

4. Tuyau (1) selon la revendication 1, **caractérisé en ce qu**'une extrémité (20) du raccord (9) présente un filetage interne (21) et le profilé du filetage interne (21) correspond au profilé extérieur du tuyau interne (2).

5. Procédé de fabrication d'un tuyau (1) pour évacuer un condensat d'une installation de climatisation selon la revendication 1, **caractérisé en ce que** le tuyau externe (5, 6) est fermé à une extrémité et de l'air sous pression (14) est soufflé à l'intérieur du tuyau externe (5, 6) par le biais du tuyau interne (2), **en ce qu'**ensuite le tuyau interne (2) est introduit dans le tuyau externe (5, 6) élargi en raison de l'air (14) soufflé sous pression et l'alimentation d'air sous pression est interrompue à la fin de l'opération d'insertion du tuyau interne (2) et lors du retour du tuyau externe isolant (5) à sa dimension d'origine, il se produit un engagement intime par blocage autour de la surface extérieure du tuyau interne (2).
